# EUROPEAN PATENT SPECIFICATION

(11) **EP 2 626 683 B1**
(45) Date of publication and mention of the grant of the patent: **16.07.2014**
(21) Application number: 12154224.5
(22) Date of filing: 07.02.2012
(51) Int. Cl.: G01M 13/04, G01N 29/24, F16C 19/52, F03D 11/00

(54) **Wind turbine, comprising a number of bearings**
Windturbine, umfassend eine Anzahl an Lagern
Éolienne comportant un certain nombre de roulements

(43) Date of publication of application: 14.08.2013
(73) Proprietor: Siemens Aktiengesellschaft, 80333 München (DE)
(72) Inventor: Hohle, Andreas Christian, 52477 Alsdorf (DE); Kölpin, Helmut, 52499 Baesweiler (DE)

(56) References cited:
- WO-A1-2011/081085
- US-A1- 2008 234 964
- US-B1- 6 571 632

## Description

The invention relates to a wind turbine, comprising a number of bearings, particularly blade bearings, respective bearing components, and at least one bearing condition determining means adapted to determine at least one bearing condition information indicating a degree of the mechanical damage of at least one respective bearing and/or at least one respective bearing component.

Wind turbines comprise a number of rotating or rotatable components such as particularly bearings or bearing components, such as particularly outer or inner rings. Thereby, it is of great importance to obtain information concerning the mechanical damage of at least one respective bearing or bearing component, whereby particularly the detection of cracks, particularly comparatively small cracks such as micro-cracks or the like has to be monitored.

Respective information, which may be denoted as bearing condition information since it indicates a degree of the mechanical damage of at least one respective bearing, is usually generated by appropriate bearing condition determining means. Yet, respective bearing condition information as obtained by known bearing condition determining means, which may be part of or related to respective monitoring systems of wind turbines, is oftentimes not sufficient or appropriate for obtaining comprehensive knowledge concerning the mechanical damage of respective bearings or bearing components of a wind turbine.

It is the object of the invention to provide a wind turbine having an improved bearing condition determining means.

This is inventively achieved by a wind turbine as initially specified, wherein the bearing condition determining means comprises at least one active Eigen-frequency measurement means.

The inventive principle suggests a respective bearing determining means comprising at least one active Eigen-frequency measurement means. The use of a respective active Eigen-frequency measurement means as a bearing condition determining means allows determining more exact and more comprehensive bearing condition information, i.e. respective information indicating a degree of the mechanical damage of respective bearings and/or respective bearing components such as particularly inner and/or outer (bearing) rings.

The inventive principle is especially useful for respective blade bearings or blade pitch bearings, i.e. bearings supporting respective rotor blades and assuring the possibility of a concerted rotation of respective rotor blades around their longitudinal axes. Hence, the mechanical damage of respective blade bearings may be monitored, whereby the determination of respective blade condition information concerning the blade bearings or respective blade bearing components allows a more comprehensive mapping of mechanical damages of respective components of the wind turbine.

The measurement principle of the inventive bearing condition determining means, i.e. a respective Eigen-frequency measurement means, is particularly based on an emission of respective defined vibration signals, i.e. vibration signals of given frequency and/or amplitude, which are transmitted through respective bearings and/or bearing components and receiving of the emitted vibration signals having propagated through the respective bearing and/or bearing components. Respective vibration signals may be borne sound signals, ultrasonic signals, or the like.

By means of appropriate mathematical algorithms, mechanical damages of the respective bearings and/or bearing components may be derived from the emitted and/or received vibration signals, i.e. particularly by determining phase or frequency differences or shifts between the emitted and the received vibration signals.

In such a manner, a respective active Eigen-frequency measurement means preferably comprises at least one activating means adapted to emit defined vibration signals and at least one receiving means adapted to receive respective vibration signals emitted from the activating means. The activating means may comprise appropriate activating or actuating elements such as sonic transducers and the like, whereas the receiving means may comprise appropriate receiving elements such as corresponding sensor elements and the like.

The inventively determined bearing condition information generally refers to all kinds of possible mechanical damages of respective bearings and/or respective bearing components. Particularly, the degree of mechanical damage of at least one respective bearing and/or bearing component as indicated by the at least one bearing condition information refers to cracks and crack detection, respectively. Thus, a respective bearing condition information may refer to crack generation and/or crack propagation and/or crack size and/or crack location, etc. in the respective bearing or respective bearing component.

It is possible that a respective bearing component is an outer or inner (bearing) ring, whereby at least one activating means is provided with an outer ring of a respective bearing and at least one receiving means is provided with an inner ring of the respective bearing, or vice versa. Hence, according to this embodiment, respective outer and inner rings of a respective bearing may be provided with one or more respective activating means and/or receiving means. In such a manner, bearing condition information may refer to mechanical damages of both the inner and outer ring of the respective bearing or solely to the inner ring or the outer ring of the respective bearing.

A respective minimum configuration according to the aforementioned embodiment of respective activating means and corresponding receiving means could be one activating means provided with an outer ring and one corresponding receiving means provided with an inner ring, or vice versa.

It is also possible to provide respective outer and inner rings with a non-uniform number of respective activating means and receiving means such as in the exemplary case of an inner ring comprising one activating means and an outer ring comprising two or more corresponding receiving means, or vice versa.

Additionally or alternatively, a respective bearing component is an outer or inner ring, whereby both at least one activating means and at least one receiving means are provided with the outer ring and/or the inner ring. Hence, respective bearing condition information may refer to either the inner ring or the outer ring of the respective bearing. In this embodiment, a pair of corresponding activating means and receiving means is provided with an outer ring or inner ring.

In either case, respective activating means and receiving means may be attached to the outer or inner circumference or surface of respective bearing components, i.e. inner or outer rings of respective bearings, which is of advantage since the activating means and receiving means are easily accessible. However, it is also possible to integrate respective activating means and receiving means in respective bearing components, which may be of advantage since the integration of activating means and/or receiving means in respective bearing components may provide a certain mechanical protection of the activating means and/or receiving means.

For obtaining exact bearing condition information it is of advantage that at least one respective activating means is disposed with a defined spatial relationship relative to at least one respective receiving means, or vice versa. Hence, the known spatial relationship, i.e. the known relative positions of the activating means and the receiving means allows better results for determining respective bearing condition information.

Preferably, the spatial relationship of the respective activating means and the respective receiving means is derived from the position of the respective activating means and/or receiving means at the inner and/or outer ring of a respective bearing and the relative position of the inner and outer ring of the respective bearing. Thereby, the spatial relationship between respective inner and outer rings of respective bearings may be calculated or derived from appropriate data taken from blade pitch control units being adapted to concertedly perform pitching of the blades, i.e. rotating the blades around their longitudinal axes. In such a manner, it is possible to exactly determine the relative spatial relationship between respective activating means and corresponding receiving means.

According to a further embodiment of the invention, a control unit is provided with the wind turbine, with the control unit being adapted to adjust at least one operational parameter of the wind turbine under consideration of the at least one bearing condition information. In such a manner, damage of respective bearings or bearing components of the wind turbine may be avoided since the control unit receives respective bearing condition information from the bearing condition determining means so that in the case of the occurrence of mechanical damages of at least one respective bearing and/or bearing component, an appropriate adjustment of respective operational parameters of the wind turbine may be accomplished. Generally, respective operational parameters of the wind turbine refer to all kinds of parameters related to the rotation of respective bearings and/or bearing components such as particularly the blade pitch activity, rotational speeds of components of the generator, gear boxes, shafts, etc.

Aside, the invention relates to a method for determining the mechanical damage of at least one bearing, particularly a blade bearing or blade pitch bearing, of a wind turbine, particularly the wind turbine as described above, and/or at least one respective bearing component of a respective bearing of the wind turbine. The method is characterised in that at least one bearing condition information indicating a degree of the mechanical damage of at least one respective bearing and/or respective bearing component is determined, whereby at least one active Eigen-frequency measurement means is used for determining the at least one bearing condition information.

Generally, all annotations relating to the inventive wind turbine also apply to the inventive method.

In the following, the invention is described in detail as reference is made to the figures, whereby:
- fig. 1: shows a principle drawing of a wind turbine according to an exemplary embodiment of the invention; and
- fig. 2 - 5: show principle drawings of diverse exemplary embodiments of respective bearings of the wind turbine according to fig. 1.

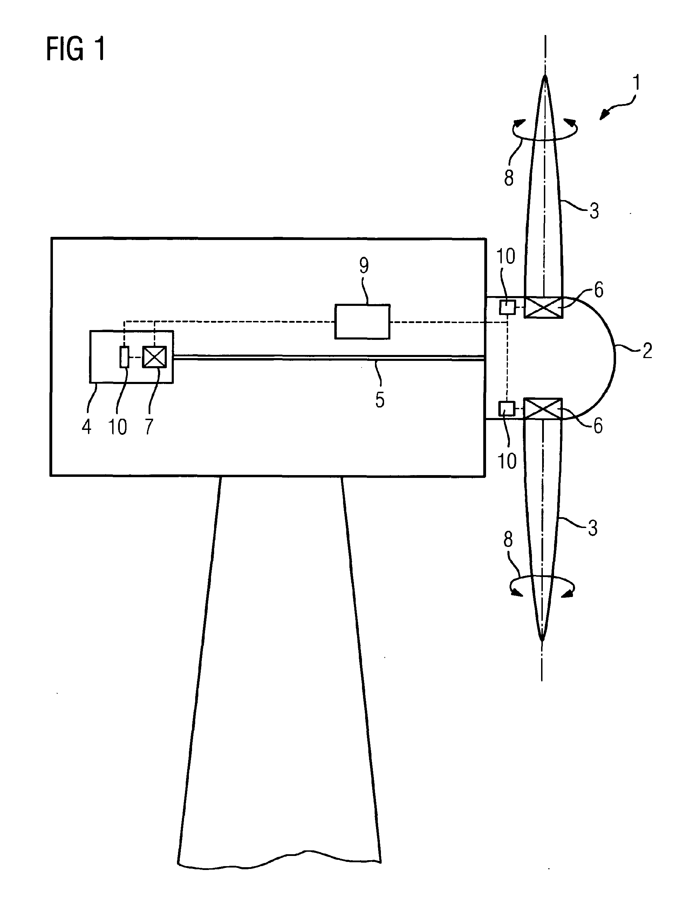

Fig. 1 shows a principle drawing of a wind turbine 1 according to an exemplary embodiment of the invention. The wind turbine 1 is a direct drive wind turbine, i.e. the rotor hub 2 supporting respective rotor blades 3 is directly mechanically coupled to the generator 4 by means of a main shaft 5. Generally, the inventive principle also applies to wind turbines with gear boxes disposed between the rotor hub 2 and the generator 4.

The wind turbine 1 comprises a number of bearings such as the blade bearings 6, which may also be denoted as blade pitch bearings, and the generator bearings 7. The blade bearings 6 are provided with the rotor hub 2 and support respective rotor blades 3, so that the latter may be rotated around their longitudinal axis (cf. arrow 8). Pitching or rotating of the rotor blades 3 is performed by a rotor blade pitching means (not explicitly shown) which communicates with a central wind turbine control unit 9 (wind turbine controller). The generator bearings 7 support the rotating part of the generator 4, i.e. the rotor, so that the latter is rotatably supported relative to the non-rotating part of the generator 4, i.e. the stator. Of course, the wind turbine 1 will usually comprise more respective bearings than the mentioned blade bearings 6 and generator bearings 7 such as bearings supporting the main shaft 5 or the like.

The wind turbine 1 is also provided with a bearing condition determining means 10 which is adapted to determine at least one bearing condition information indicating a degree of the mechanical damage of at least the blade bearings 6 and the generator bearings 7.

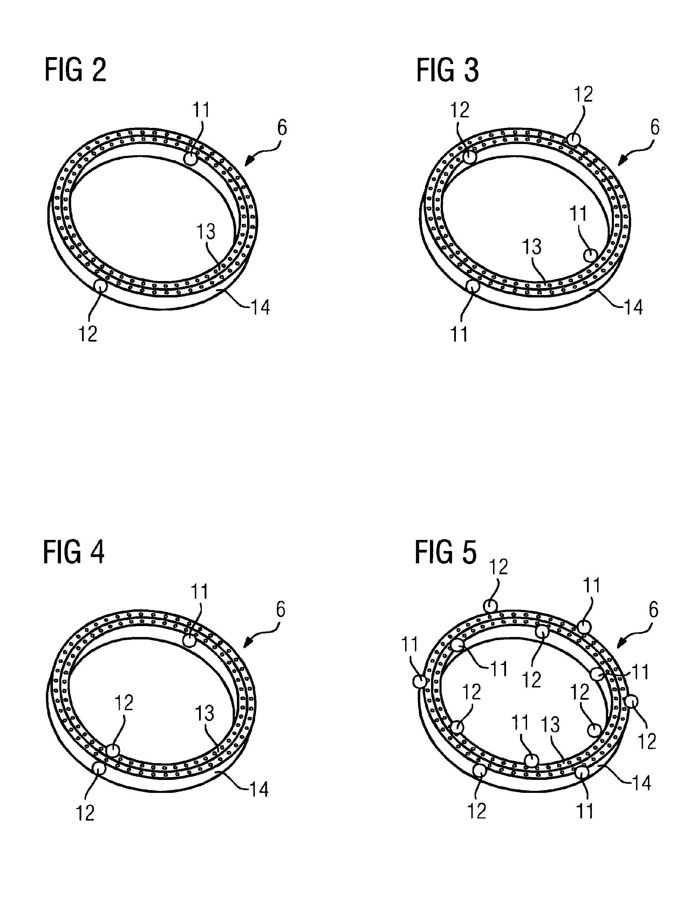

The inventive bearing condition determining means 10 comprises at least one active Eigen-frequency measurement means which comprises respective activating means 11 adapted to emit defined vibration signals such as borne sound signals and/or ultrasonic signals for instance and at least one corresponding receiving means 12 in terms of at least one sensor, which receiving means 12 is adapted to receive respective vibration signals emitted from the activating means 11 and propagated through respective bearings or respective bearing components (cf. figs. 2 - 5).

Hence, the wind turbine 1 according to fig. 1 allows an active monitoring of possible mechanical damages of respective bearings, such as particularly the blade bearings 6 and the generator bearings 7 and respective components of the bearings such as particularly the respective outer rings 13 and inner rings 14 of the bearings (cf. fig. 2 - 5). In such a manner, the bearing condition information indicates particularly cracks, i.e. crack generation, crack propagation, crack sizes, crack location, etc. by using respective Eigen-frequency measurements. Thereby, the determination of respective bearing condition information is independent of speed and load on the respective bearings, particularly the blade bearings 6 and the generator bearings 7.

The control unit 9 is adapted to control respective operational parameters of the wind turbine 1 under consideration of the bearing condition information, which is continuously or discontinuously determined by the bearing condition determining means 10. In such a manner, mechanical damages may be detected already at early stages of crack generation and/or crack propagation, whereby operation of the wind turbine 1, i.e. respective operational parameters of the wind turbine 1 such as particularly the blade pitch activity, the rotational speed of the rotor hub 2 or the main shaft 5, power output of the generator 4, etc. may be accordingly adjusted. Generally, the operation of the wind turbine 1 will be adjusted in such a manner, that the mechanical load on the respective damaged bearings and/or bearing components will be reduced.

The inventive wind turbine 1, i.e. preferably the control unit 9, is also adapted to perform a method for determining the mechanical damage of at least one bearing, particularly the blade bearings 6 as well as the generator bearings 7, whereby at least one respective bearing condition information indicating a degree of the mechanical damage of the respective bearings, i.e. particularly the blade bearings 6 and/or the generator bearings 7, is determined. Thereby, determination of the respective bearing condition information is executed by an active Eigen-frequency measurement means, comprising at least one activating means 11 and at least one corresponding receiving means 12.

Figures 2 - 5 show diverse exemplary embodiments of respective bearings of the wind turbine according to fig. 1. It is discernible that respective bearings, which may be blade bearings 6 for instance, comprise an inner ring 13 and an outer ring 14. Thereby, the inner ring 13 may be associated with the rotor blade 3, i.e. be a part of to the rotor blade 3, whereas the outer ring 14 may be associated with the rotor hub 2, i.e. be a part of the rotor hub 2, or vice versa.

According to the embodiment of fig. 2, a respective activating means 11 is disposed with the inner ring 13, whereas a respective corresponding receiving means 12 is disposed with the outer ring 14. The respective activating means 11 and the receiving means 12 may be integrated in the respective rings of the bearing 6 or be securely attached to the respective inner or outer circumferences of the respective inner ring 13 and outer ring 14 of the bearing 6.

Fig. 3 shows a further embodiment of the blade bearing 6, whereby both the outer ring 14 and the inner ring 13 are provided with a corresponding pair of activating means 11 and receiving means 12. Thus, respective corresponding pairs of activating means 11 and receiving means 12 may be separately provided for the inner ring 13 and the outer ring 14. Yet, it is also possible that a respective activating means 11 attached to the inner ring 13 is correlated to a corresponding receiving means 12 attached to the outer ring 14.

Fig. 4 shows a further exemplary embodiment, whereby the number of respective activating means 11 and receiving means 12 is not uniform, since the inner ring is provided with a first receiving means 12 and the outer ring 14 is provided with a second receiving means 12, whereas only one respective activating means 11 is provided with the inner ring. Of course, an opposite arrangement of respective activating means 11 and receiving means 12 is also feasible.

Fig. 5 shows a further exemplary embodiment, whereby three activating means 11 are provided with both the inner ring 13 as well as the outer ring 14. In the same manner, three respective receiving means 12 are provided with both the inner ring 13 and the outer ring 14. Arbitrary correlations of respective activating means 11 and receiving means 12 are possible.

In either case, the spatial relationship of the respective activating means 11 and the respective receiving means 12 is known. Preferably, the spatial relationship of the respective activating means 11 and the respective receiving means 12 may be derived from the absolute position of the respective activating means 11 and/or receiving means 12 at the respective inner ring 13 and/or outer ring 14 and the relative position of the inner ring 13 and the outer ring 14. The latter may be obtained from data of a respective blade pitch activity means, for instance.

Although the present invention has been described in detail with reference to the preferred embodiment, the present invention is not limited by the disclosed examples from which the skilled person is able to derive other variations without departing from the scope of the invention.

## Claims

1. Wind turbine (1), comprising a number of bearings (6, 7), particularly blade bearings (6), respective bearing components, and at least one bearing condition determining means (10) adapted to determine at least one bearing condition information indicating a degree of the mechanical damage of at least one respective bearing (6, 7) and/or at least one respective bearing component, **characterised in that** the bearing condition determining means (10) comprises at least one active Eigen-frequency measurement means.

2. Wind turbine according to claim 1, wherein the at least one active Eigen-frequency measurement means comprises at least one activating means (11) adapted to emit defined vibration signals and at least one receiving means (12) adapted to receive respective vibration signals emitted from the activating means (11).

3. Wind turbine according to claim 2, wherein a respective bearing component is an outer ring (14) or inner ring (13), whereby at least one activating means (11) is provided with an outer ring (14) of a respective bearing (6, 7) and at least one receiving means (12) is provided with an inner ring (13) of the respective bearing (6, 7), or vice versa.

4. Wind turbine according to claims 2 or 3, wherein a respective bearing component is an outer ring (14) or inner ring (13), whereby both at least one activating means (11) and at least one respective receiving means (12) is provided with the outer ring (14) and/or the inner ring (13).

5. Wind turbine according to one of the claims 2 to 4, wherein at least one respective activating means (11) is disposed with a defined spatial relationship relative to at least one respective receiving means (12).

6. Wind turbine according to claim 3 or 4 and 5, wherein the spatial relationship of the respective activating means (11) and the respective receiving means (12) is derived from the position of the respective activating means (11) and/or receiving means (12) at the inner ring (13) and/or outer ring (14) and the relative position of the inner ring (13) and outer ring (14).

7. Wind turbine according to one of the preceding claims, wherein a control unit (9) is provided, with the control unit (9) being adapted to adjust at least one operational parameter of the wind turbine (1) under consideration of the at least one bearing condition information.

8. Method for determining the mechanical damage of at least one bearing (6, 7), particularly a blade bearing (6), of a wind turbine (1), particularly the wind turbine (1) according to one of the preceding claims, and/or at least one respective bearing component, whereby at least one bearing condition information indicating a degree of the mechanical damage of at least one respective bearing (6, 7) and/or respective bearing component is determined, **characterised in that** at least one active Eigen-frequency measurement means is used for determining the at least one bearing condition information.

## Patentansprüche

1. Windturbine (1), umfassend eine Anzahl von Lagern (6, 7), insbesondere Rotorblattlagern (6), jeweilige Lagerkomponenten und mindestens ein Lagerzustands-Bestimmungsmittel (10), das dazu eingerichtet ist, mindestens eine Lagerzustandsinformation zu bestimmen, die einen Grad der mechanischen Schädigung mindestens eines jeweiligen Lagers (6, 7) und/oder mindestens einer jeweiligen Lagerkomponente angibt, **dadurch gekennzeichnet, dass** das Lagerzustands-Bestimmungsmittel (10) mindestens ein aktives Eigenfrequenz-Messmittel umfasst.

2. Windturbine nach Anspruch 1, wobei das mindestens eine aktive Eigenfrequenz-Messmittel mindestens ein Aktivierungsmittel (11), das dazu eingerichtet ist, definierte Schwingungssignale auszusenden, und mindestens ein Empfangsmittel (12), das dazu eingerichtet ist, von dem Aktivierungsmittel (11) ausgesendete jeweilige Schwingungssignale zu empfangen, umfasst.

3. Windturbine nach Anspruch 2, wobei eine jeweilige Lagerkomponente ein Außenring (14) oder Innenring (13) ist, wobei mindestens ein Aktivierungsmittel (11) an einem Außenring (14) eines jeweiligen Lagers (6, 7) vorgesehen ist und mindestens ein Empfangsmittel (12) an einem Innenring (13) des jeweiligen Lagers (6, 7) vorgesehen ist, oder umgekehrt.

4. Windturbine nach den Ansprüchen 2 oder 3, wobei eine jeweilige Lagerkomponente ein Außenring (14) oder Innenring (13) ist, wobei sowohl mindestens ein Aktivierungsmittel (11) als auch mindestens ein jeweiliges Empfangsmittel (12) an dem Außenring (14) und/oder dem Innenring (13) vorgesehen sind.

5. Windturbine nach einem der Ansprüche 2 bis 4, wobei mindestens ein jeweiliges Aktivierungsmittel (11) mit einer definierten räumlichen Beziehung bezüglich mindestens eines jeweiligen Empfangsmittels (12) angeordnet ist.

6. Windturbine nach Anspruch 3 oder 4 und 5, wobei die räumliche Beziehung des jeweiligen Aktivierungsmittels (11) und des jeweiligen Empfangsmittels (12) aus der Position des jeweiligen Aktivierungsmittels (11) und/oder Empfangsmittels (12) an dem Innenring (13) und/oder Außenring (14) und der relativen Position des Innenringes (13) und Außenringes (14) abgeleitet ist.

7. Windturbine nach einem der vorhergehenden Ansprüche, wobei eine Steuereinheit (9) vorgesehen ist, wobei die Steuereinheit (9) dazu eingerichtet ist, mindestens einen Betriebsparameter der Windturbine (1) unter Berücksichtigung der mindestens einen Lagerzustandsinformation einzustellen.

8. Verfahren zum Bestimmen der mechanischen Schädigung mindestens eines Lagers (6, 7), insbesondere eines Rotorblattlagers (6), einer Windturbine (1), insbesondere der Windturbine (1) nach einem der vorhergehenden Ansprüche, und/oder mindestens einer jeweiligen Lagerkomponente, wobei mindestens eine Lagerzustandsinformation, die einen Grad der mechanischen Schädigung mindestens eines jeweiligen Lagers (6, 7) und/oder einer jeweiligen Lagerkomponente angibt, bestimmt wird, **dadurch gekennzeichnet, dass** mindestens ein aktives Eigenfrequenz-Messmittel zum Bestimmen der mindestens einen Lagerzustandsinformation verwendet wird.

## Revendications

1. Éolienne (1), comprenant un certain nombre de paliers (6, 7), en particulier des paliers de pales (6), des composants de paliers respectifs, et au moins un moyen de détermination d'état de palier (10) conçu pour déterminer au moins une information d'état de palier qui indique un degré de détérioration mécanique d'au moins un palier respectif (6, 7) et/ou d'au moins un composant de palier respectif, **caractérisée en ce que** le moyen de détermination d'état de palier (10) comprend au moins un moyen de mesure de fréquence propre active.

2. Éolienne selon la revendication 1, dans laquelle ledit au moins un moyen de mesure de fréquence propre active comprend au moins un moyen d'activation (11) conçu pour émettre des signaux vibratoires définis et au moins un moyen de réception (12) conçu pour recevoir des signaux vibratoires respectifs émis par le moyen d'activation (11).

3. Éolienne selon la revendication 2, dans laquelle un composant de palier respectif est une bague extérieure (14) ou une bague intérieure (13), moyennant quoi au moins un moyen d'activation (11) est pourvu d'une bague extérieure (14) d'un palier respectif (6 , 7) et au moins un moyen de réception (12) est pourvu d'une bague intérieure (13) du palier respectif (6, 7), ou vice versa.

4. Éolienne selon les revendications 2 ou 3, dans laquelle un composant de palier respectif est une bague extérieure (14) ou une bague intérieure (13), moyennant quoi au moins un moyen d'activation (11) et au moins un moyen de réception respectif (12) sont tous deux pourvus de la bague extérieure (14) et/ou de la bague intérieure (13).

5. Éolienne selon l'une quelconque des revendications 2 à 4, dans laquelle au moins un moyen d'activation respectif (11) est disposé avec une relation spatiale définie par rapport à au moins un moyen de réception respectif (12).

6. Éolienne selon la revendication 3 ou 4 et 5, dans laquelle la relation spatiale du moyen d'activation respectif (11) et du moyen de réception respectif (12) est dérivée de la position du moyen d'activation (11) et/ou du moyen de réception (12) respectif au niveau de la bague intérieure (13) et/ou de la bague extérieure (14) et de la position relative de la bague intérieure (13) et de la bague extérieure (14).

7. Éolienne selon l'une quelconque des revendications précédentes, dans laquelle une unité de commande (9) est prévue, l'unité de commande (9) étant conçue pour ajuster au moins un paramètre de fonctionnement de l'éolienne (1) au vu de ladite au moins une information d'état de palier.

8. Procédé de détermination de la détérioration mécanique d'au moins un palier (6, 7), en particulier un palier de pale (6), d'une éolienne (1), en particulier de l'éolienne (1) selon l'une quelconque des revendications précédentes, et/ou d'au moins un composant de palier respectif, dans lequel au moins une information d'état de palier qui indique un degré de la détérioration mécanique d'au moins un palier respectif (6, 7) et/ou d'un composant de palier respectif est déterminée, **caractérisé en ce qu'**au moins un moyen de mesure de fréquence propre active est utilisé pour déterminer ladite au moins une information d'état de palier.
